# EUROPEAN PATENT APPLICATION

(11) **EP 1 152 280 A1**
(43) Date of publication of application: **07.11.2001**
(21) Application number: 00109431.7
(22) Date of filing: 03.05.2000
(51) Int. Cl.: G02C 9/00

(54) **Single magnetic arrangement for attaching secondary eyeglasses to a pair of primary eyeglasses**

(71) Applicant: Wong, Ping-Cheuk, Kowloon, Hong Kong (CN)
(72) Inventor: Wong, Ping-Cheuk, Kowloon, Hong Kong (CN)
(74) Representative: Winkler, Andreas, Dr.

(57) **Abstract**

A single magnetic arrangement is provided for attaching secondary eyeglasses to a pair of primary eyeglasses. A magnetic member is embedded into a nose bridge of a frame front or each of two temples of the pair of primary eyeglasses for magnetic attraction to a nose bridge or two engaging pieces of a frame front of the secondary eyeglasses. Alternatively, a magnetic member is embedded into the nose bridge or two engaging pieces of the frame front of the secondary eyeglasses for magnetic attraction to the nose bridge of the frame front or each of two temples of the pair of primary eyeglasses.

## Description

### Background of the Invention

### 1. Field of the Invention

The present invention relates to a single magnetic arrangement for attaching secondary eyeglasses to a pair of primary eyeglasses.

### 2. Description of the Related Art

It is common to releasably attach secondary eyeglasses (e.g., sunglasses) to a pair of primary eyeglasses (such as a pair of myopic eyeglasses). The frame front of the pair of primary eyeglasses and the frame front of the secondary eyeglasses are both equipped with magnetic elements to attract each other. It is troublesome and time-consuming to machine a groove in each of the frame front of the pair of primary eyeglasses and the frame front of the secondary eyeglasses for embedding the magnetic elements. In addition, problems arise if the magnetic elements fail to align with each other.

The present invention is intended to provide a single magnetic arrangement that mitigates and/or obviate the above problems.

### Summary of the Invention

In accordance with the present invention, a single magnetic arrangement is provided for attaching secondary eyeglasses to a pair of primary eyeglasses. A magnetic member is embedded into a nose bridge of a frame front or each of two temples of the pair of primary eyeglasses for magnetic attraction to a nose bridge or two engaging pieces of a frame front of the secondary eyeglasses. Alternatively, a magnetic member is embedded into the nose bridge or two engaging pieces of the frame front of the secondary eyeglasses for magnetic attraction to the nose bridge of the frame front or each of two temples of the pair of primary eyeglasses.

Other objects, advantages, and novel features of the invention will become more apparent from the following detailed description when taken in conjunction with the accompanying drawings.

### Brief Description of the Drawings

Fig. 1 is a perspective view of a pair of primary eyeglasses and secondary eyeglasses equipped with a magnetic arrangement in accordance with the present invention.
Fig. 2 is an exploded perspective view of the pair of primary eyeglasses and secondary eyeglasses in Fig. 1.
Fig. 3 is an exploded top view of the pair of primary eyeglasses and secondary eyeglasses in Fig. 1.
Fig. 4 is an enlarged view illustrating attachment of the secondary eyeglasses to the pair of primary eyeglasses.
Fig. 5 is a view similar to Fig. 4, wherein the secondary eyeglasses and the pair of primary eyeglasses are engaged together.
Fig. 6 is an exploded top view of a pair of primary eyeglasses and secondary eyeglasses equipped with a second embodiment of the magnetic arrangement in accordance with the present invention.
Fig. 7 is a perspective view of the secondary eyeglasses in Fig. 6.
Fig. 8 is an exploded top view of a pair of primary eyeglasses and secondary eyeglasses equipped with a third embodiment of the magnetic arrangement in accordance with the present invention.
Fig. 9 is an exploded top view of a pair of primary eyeglasses and secondary eyeglasses equipped with a fourth embodiment of the magnetic arrangement in accordance with the present invention.

### Detailed Description of the Preferred Embodiments

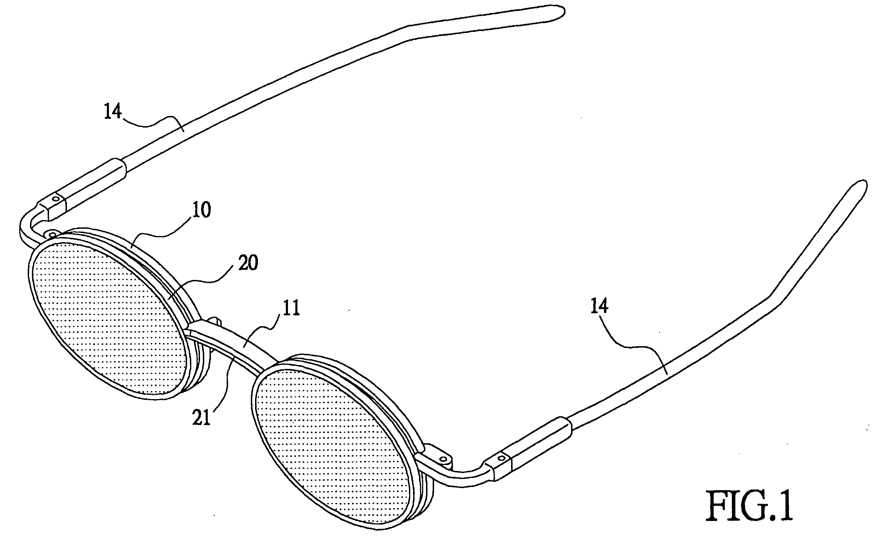

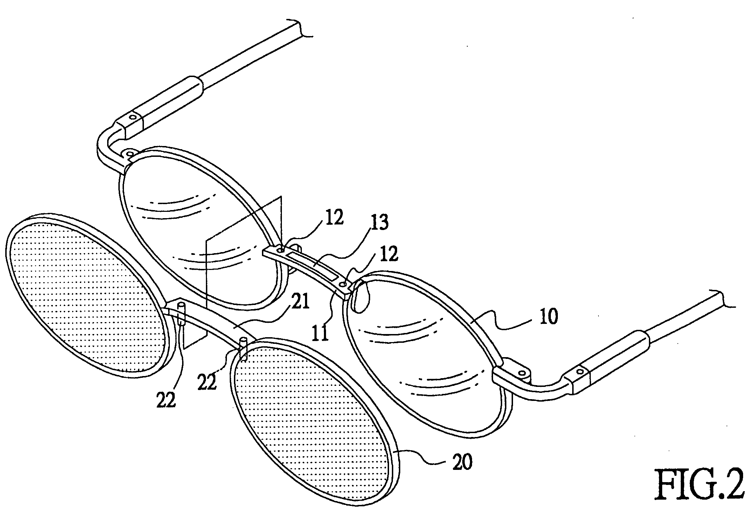

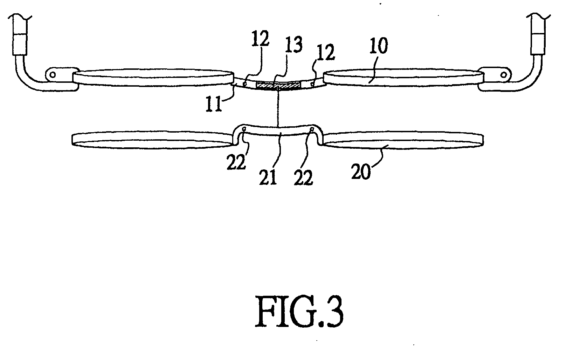

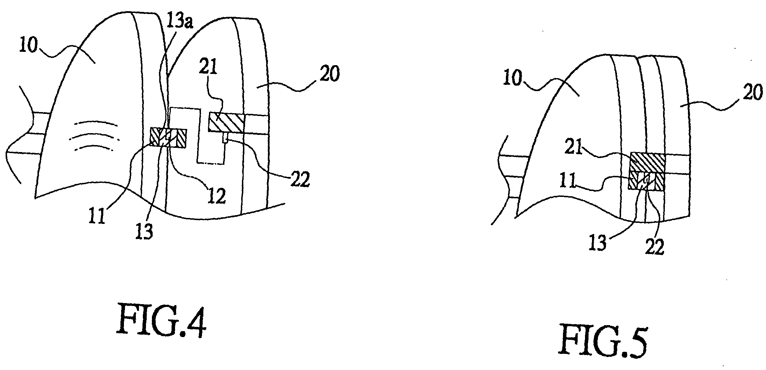

Referring to Figs. 1 through 9 and initially to Figs. 1 and 2, a pair of primary eyeglasses in accordance with the present invention generally includes a frame front 10 and two temples 14 pivotally connected to two sides of the frame front 10, which is conventional and therefore not described in detail. Secondary eyeglasses includes a frame front 20 intended to be attached to the pair of primary eyeglasses. The frame front 10 of the pair of primary eyeglasses includes a nose bridge 11 with a groove 13a (Fig. 4) into which a magnetic member 13 (i.e., magnet) is embedded. The nose bridge 11 further includes two vertical positioning holes 12. The secondary eyeglasses includes a frame front 20 and a bridge 21 with two downwardly extending pins 22 that are extended through the positioning holes 12 of the nose bridge 11 of the pair of primary eyeglasses, thereby preventing relative sliding movement between the pair of primary eyeglasses and the secondary eyeglasses along a horizontal direction. The nose bridge 21 of the frame front 20 is made of material that can be attracted by the magnetic member 13. Alternatively, the nose bridge 21 of the frame front 20 is made of material that can be attracted by the magnetic member 13 after the nose bridge 21 is magnetized. Thus, the secondary eyeglasses can be reliably yet releasably attached to the frame front 10 of the pair of primary eyeglasses (see Figs. 3 through 5). It is noted that the nose bridge 21 of the frame front 20 of the secondary eyeglasses extends outward so as to be overlapped with the nose bridge 11 of the frame front 10 of the pair of primary eyeglasses.

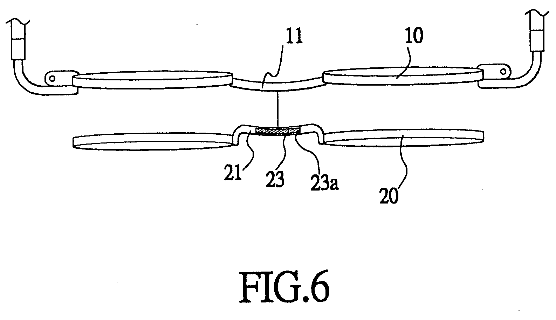

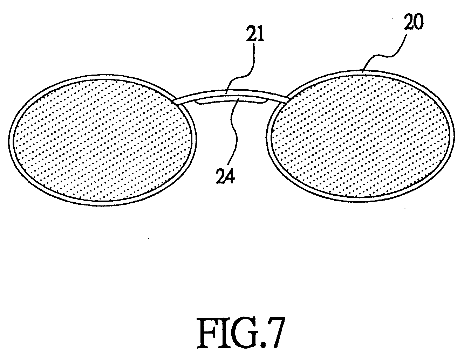

Turning to Fig. 6, in a second embodiment of the invention, the nose bridge 21 of the frame front 20 of the secondary eyeglasses includes a groove 23a into which a magnetic member 23 is embedded. The nose bridge 11 of the frame front 10 of the pair of primary eyeglasses is made of material that can be attracted by the magnetic member 23. Alternatively, the nose bridge 11 of the frame front 10 is made of material that can be attracted by the magnetic member 23 after the nose bridge 11 is magnetized. Thus, the secondary eyeglasses can be releasably attached to the frame front 10 of the pair of primary eyeglasses. In addition, the nose bridge 21 of the frame front 20 of the secondary eyeglasses includes a downwardly facing hook 24 (Fig. 7) that is engaged with a rear edge of the nose bridge 11 of the frame front 10 of the pair of primary eyeglasses, thereby providing secure and accurate attachment of the secondary eyeglasses to the pair of primary eyeglasses.

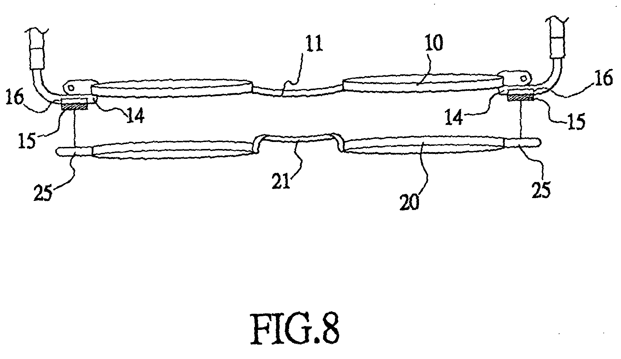

Fig. 8 illustrates a third embodiment of the present invention, wherein a forwardly facing end face of the front end of each temple 14 of the pair of primary eyeglasses includes a groove 16 into which a magnetic member 15 is embedded. Each of two sides of the frame front 20 of the secondary eyeglasses includes an engaging piece 25 formed thereon. The engaging pieces 25 are made of material that can be attracted by the magnetic members 15. Alternatively, the engaging pieces 25 are made of material that can be attracted by the magnetic members 15 after the engaging pieces 25 are magnetized.

When attaching the frame front 20 of the secondary eyeglasses to the frame front 10 of the pair of primary eyeglasses, the engaging pieces 25 and the magnetic members 15 attract each other. In addition, the nose bridge 21 of the frame front 20 of the secondary eyeglasses may be made of an elastic steel wire so as to be hooked to a rear side of the nose bridge 11 of the frame front 10 of the pair of primary eyeglasses. Thus, secure and accurate attachment of the secondary eyeglasses to the pair of primary eyeglasses is provided.

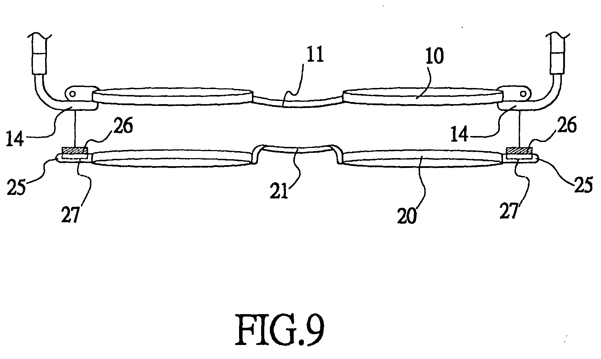

Fig. 9 illustrates a fourth embodiment of the present invention, wherein each of two sides of the frame front 20 of the secondary eyeglasses includes an engaging piece 25 formed thereon. Each engaging piece 25 includes a groove 27 into which a magnetic member 26 is embedded. The temples 14 of the pair of primary eyeglasses are made of material that can be attracted by the magnetic members 26. Alternatively, the temples 14 are made of material that can be attracted by the magnetic members 26 after the temples 26 are magnetized.

When attaching the frame front 20 of the secondary eyeglasses to the frame front 10 of the pair of primary eyeglasses, the engaging pieces 25 and the forwardly facing end faces of the front ends of the temples 14 attract each other. In addition, the nose bridge 21 of the frame front 20 of the secondary eyeglasses may be made of an elastic steel wire so as to be hooked to a rear side of the nose bridge 11 of the frame front 10 of the pair of primary eyeglasses. Thus, secure and accurate attachment of the secondary eyeglasses to the pair of primary eyeglasses is provided.

Although the invention has been explained in relation to its preferred embodiment, it is to be understood that many other possible modifications and variations can be made without departing from the spirit and scope of the invention as hereinafter claimed.
The features disclosed in the foregoing description, in the claims and/or in the accompanying drawings may, both separately and in any combination thereof, be material for realising the invention in diverse forms thereof.

## Claims

1. In a combination of a pair of primary eyeglasses and secondary eyeglasses intended to be attached to the primary eyeglasses, the pair of primary eyeglasses comprising a frame front and two temples pivotally connected to two sides of the frame front, the secondary eyeglasses including a frame front, the frame front of the pair of primary eyeglasses including a nose bridge into which a magnetic member is embedded, the nose bridge of the frame front of the secondary eyeglasses are made of material that can be attracted by the magnetic member.

2. The combination as claimed in claim 1, wherein the nose bridge of the frame front of the pair of primary eyeglasses includes a groove into which the magnetic member is embedded.

3. The combination as claimed in claim 1, wherein the nose bridge of the frame front of the pair of primary eyeglasses further includes two vertical positioning holes, and the nose bridge of the frame front of the secondary eyeglasses includes two downwardly extending pins that are extended through the positioning holes of the nose bridge of the pair of primary eyeglasses, thereby preventing relative sliding movement between the pair of primary eyeglasses and the secondary eyeglasses along a horizontal direction.

4. The combination as claimed in claim 1, wherein the nose bridge of the frame front of the secondary eyeglasses is made of material that can be attracted by the magnetic member after the nose bridge of the frame front of the secondary eyeglasses is magnetized.

5. In a combination of a pair of primary eyeglasses and secondary eyeglasses intended to be attached to the primary eyeglasses, the pair of primary eyeglasses comprising a frame front and two temples pivotally connected to two sides of the frame front, the secondary eyeglasses including a frame front, the frame front of the secondary eyeglasses including a nose bridge into which a magnetic member is embedded, the frame front of the pair of primary eyeglasses including a nose bridge made of material that can be attracted by the magnetic member.

6. The combination as claimed in claim 5, wherein the nose bridge of the frame front of the secondary eyeglasses includes a groove into which the magnetic member is embedded.

7. The combination as claimed in claim 5, wherein the nose bridge of the frame front of the pair of primary eyeglasses is made of material that can be attracted by the magnetic member after the nose bridge of the frame front of the pair of primary eyeglasses is magnetized.

8. The combination as claimed in claim 5, wherein the nose bridge of the frame front of the secondary eyeglasses includes a downwardly facing hook that is engaged with a rear edge of the nose bridge of the frame front of the pair of primary eyeglasses, thereby providing secure and accurate attachment of the secondary eyeglasses to the pair of primary eyeglasses.

9. In a combination of a pair of primary eyeglasses and secondary eyeglasses intended to be attached to the primary eyeglasses, the pair of primary eyeglasses comprising a frame front with a nose bridge and two temples pivotally connected to two sides of the frame front, the secondary eyeglasses including a frame front with a nose bridge, each said temple including a front end into which a magnetic member is embedded, the nose bridge of the frame front of the secondary eyeglasses including two sides each having an engaging member formed thereon, each said engaging member being made of material that can be attracted by the magnetic member.

10. The combination as claimed in claim 9, wherein the front end of each said temple of the pair of primary eyeglasses includes a forwardly facing end face with a groove into which the magnetic member.

11. The combination as claimed in claim 9, wherein each said engaging member is made of material that can be attracted by the magnetic member after the engaging member is magnetized.

12. The combination as claimed in claim 9, wherein the nose bridge of the frame front of the secondary eyeglasses is made of an elastic steel wire so as to be hooked to a rear side of the nose bridge of the frame front of the pair of primary eyeglasses.

13. In a combination of a pair of primary eyeglasses and secondary eyeglasses intended to be attached to the primary eyeglasses, the pair of primary eyeglasses comprising a frame front with a nose bridge and two temples pivotally connected to two sides of the frame front, the secondary eyeglasses including a frame front with a nose bridge, each said temple including a front end, the nose bridge of the frame front of the secondary eyeglasses including two sides each having an engaging member formed thereon, a magnetic member being embedded into each said engaging member, the front end of each said temple of the pair of primary eyeglasses being made of material that can be attracted by the magnetic member.

14. The combination as claimed in claim 13, wherein each said engaging piece of the secondary eyeglasses includes a groove into which the magnetic member is embedded.

15. The combination as claimed in claim 13, wherein each said temple of the pair of primary eyeglasses is made of material that can be attracted by the magnetic member after the temple is magnetized.

16. The combination as claimed in claim 13, wherein the nose bridge of the frame front of the secondary eyeglasses is made of an elastic steel wire so as to be hooked to a rear side of the nose bridge of the frame front of the pair of primary eyeglasses.
